# EUROPEAN PATENT SPECIFICATION

(11) **EP 3 530 620 B1**
(45) Date of publication and mention of the grant of the patent: **02.06.2021**
(21) Application number: 17861839.3
(22) Date of filing: 06.10.2017
(51) Int. Cl.: C01B 33/107

(54) **RESIDUE DISPOSAL METHOD, AND METHOD FOR PRODUCING TRICHLOROSILANE**
RÜCKSTANDSENTSORGUNGSVERFAHREN UND VERFAHREN ZUR HERSTELLUNG VON TRICHLORSILAN
PROCÉDÉ D'ÉLIMINATION DE RÉSIDUS ET PROCÉDÉ DE PRODUCTION DE TRICHLOROSILANE

(30) Priority: 18.10.2016 JP 2016204660
(43) Date of publication of application: 28.08.2019
(73) Proprietor: Tokuyama Corporation, Shunan-shi, Yamaguchi 745-8648 (JP)
(72) Inventor: YAMASHITA, Isao, Shunan-shi Yamaguchi 745-8648 (JP)
(74) Representative: Bittner, Thomas L.
(86) International application number: PCT/JP2017/036491
(87) International publication number: WO 2018/074268

(56) References cited:
- EP-A1- 2 540 666
- EP-B1- 2 262 729
- JP-A- 2001 261 324
- JP-A- 2005 029 428
- JP-A- 2006 001 804
- JP-A- 2006 001 804
- JP-A- 2008 093 523
- JP-A- 2009 271 022
- JP-A- 2013 010 648
- JP-A- 2013 231 555

## Description

The invention relates to a residue disposal method and a trichlorosilane producing method.

### Background

Highly pure trichlorosilane (SiHCl₃) is used to produce polycrystalline silicon which is used as materials of a semiconductor and a solar cell. Trichlorosilane is obtained through, for example, the following reaction. First, silicon (Si) and hydrogen chloride (HCI), each of which is a raw material, are reacted with each other. By so doing, trichlorosilane is produced as a result of a main reaction shown by Formula (1), while tetrachlorosilane (SiCl₄) is produced as a result of a side reaction shown by Formula (2). Tetrachlorosilane is recovered and then reused, so that tetrachlorosilane is converted into trichlorosilane as shown by Formula (3). Alternatively, in some cases, trichlorosilane is produced through a reaction shown by Formula (3) without use of hydrogen chloride.
(1)

   Si + 3 HCl → SiHCl₃ + H₂
(2)

   Si + 4 HCl → SiCl₄+ 2 H₂
(3)

   3 SiCl₄ + 2 H₂ + Si → 4 SiHCl₃

A gas produced through each of the above reactions (reaction product gas) contains chlorosilane compounds, such as low-boiling silane and tetrachlorosilane, which are byproducts, in addition to trichlorosilane. Furthermore, the reaction product gas can contain (i) hydrogen which is produced as a by-product and (ii) an impurity derived from metal silicon. In order to recover a large amount of trichlorosilane and a large amount of, for example, tetrachlorosilane, which is reused, it is necessary to eliminate the impurity as much as possible from the reaction product gas. Further, aluminum contained in the impurity reacts with a chlorosilane compound, hydrogen chloride, or the like, and consequently becomes aluminum chloride (AlCl₃). This aluminum chloride causes blockage in a pipe via which devices, used to produce trichlorosilane, are connected. This results in a decrease in efficiency of production of trichlorosilane. Under the circumstances, a method of removing metal chloride including aluminum chloride is demanded for the purpose of prevention of blockage in a pipe.

For example, JP 2011-504452 A (EP 2 262 729 A1) discloses a method of removing aluminum chloride and the other metal chloride from liquid chlorosilane. Specifically, the method is a method in which, among a mixture of liquids and solids which mixture has been obtained by crystallizing aluminum chloride and the other metal chloride on a seed from liquid chlorosilane, a liquid containing a solid in a large amount is transferred to a waste concentrating device.

EP 2 540 666 A1 discloses a method for manufacturing trichlorosilane. A reaction gas is obtained and condensed using a distillation system including a first distillation column and a secondary distillation column so as to refine trichlorosilane. A resulting liquid in which aluminum chloride is concentrated is extracted, concentrated and dried, and then aluminum chloride is exhausted.

However, a conventional technique as described above has room for improvement in terms of efficiently disposing of a residue without causing blockage in a pipe. Furthermore, the conventional technique as described above also has room for improvement in terms of recovering a chlorosilane compound at a higher recovery rate so that a waste contains the chlorosilane compound in an extremely small amount.

### Summary

The invention has been made in view of the above problems, and an object is to realize a method of efficiently disposing of a residue without causing blockage in a pipe, while recovering a chlorosilane compound at a higher recovery rate.

In order to attain the above object, the inventor carried out diligent studies, and found that it is possible to efficiently dispose of a residue without causing blockage in a pipe and possible to recover a chlorosilane compound at a higher recovery rate, by drying the residue so that the residue contains the chlorosilane compound in an amount equal to or lower than a specific value.

A residue disposal method in accordance with the invention is defined in independent claim 1 and is a residue disposal method of disposing of a residue which contains aluminum chloride and which is discharged in a reaction product gas processing step included in a trichlorosilane producing method of producing trichlorosilane by reacting metal silicon, tetrachlorosilane, and hydrogen with each other, the residue disposal method including: a drying step of (i) drying the residue so that the residue contains a chlorosilane compound in an amount of not more than 10% by mass and (ii) obtaining a powdered residue. The temperature in the drying step is 50°C to 130°C.

Further, a trichlorosilane producing method comprising, as a step, the residue disposal method in accordance with the invention is provided.

It is possible to sufficiently dry a residue and turn the residue into a powdered residue. Therefore, blockage is not caused in a pipe, as compared with a case where the residue is disposed of as slurry. Furthermore, it is possible to efficiently dispose of the residue by, for example, pneumatic transport which is carried out with use of a carrier gas. Moreover, the residue is dried so that a waste

(powdered residue) contains a chlorosilane compound in an extremely small amount. In other words, it is possible to recover the chlorosilane compound at a high recovery rate.

### Description of Embodiments

- Fig. 1: is a view schematically illustrating steps taken until a residue, which has been generated during production of trichlorosilane, is disposed of.
- Fig. 2: is a graph illustrating respective variations, with time, of (i) a temperature inside a vertical stirring dryer, (ii) a concentration of a solid substance contained in an obtained residue, (iii) a weight of metal silicon contained in the obtained residue, (iv) power of a stirring blade, and (v) an electric current value of a motor of the stirring blade.

The following description will discuss an embodiment in detail. Unless otherwise specified herein, a numerical range "A to B" means "not less than A (equal to or more than A) and not more than B (equal to or less than B)".

A residue disposal method in accordance with an embodiment is a residue disposal method of disposing of a residue which contains aluminum chloride and which is discharged in a reaction product gas processing step included in a trichlorosilane producing method of producing trichlorosilane by reacting metal silicon, tetrachlorosilane, and hydrogen with each other, the residue disposal method particularly including: a drying step of (i) drying the residue so that the residue contains a chlorosilane compound in an amount of not more than 10% by mass and (ii) obtaining a powdered residue. A trichlorosilane producing method in accordance with an embodiment is a trichlorosilane producing method including, as a step, the residue disposal method.

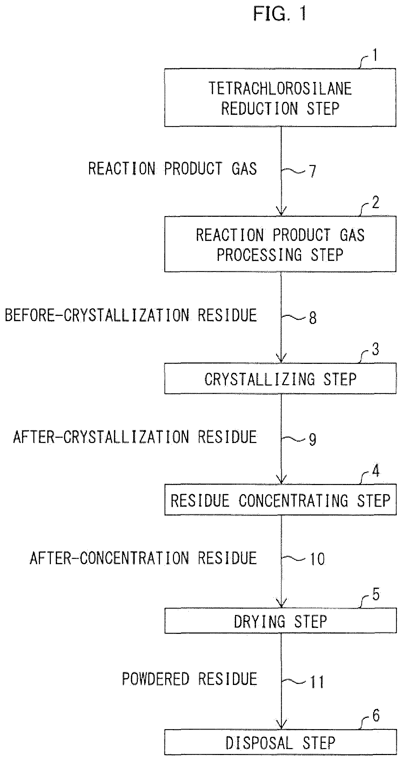

Fig. 1 is a view schematically illustrating steps taken until a residue, which has been generated during production of trichlorosilane, is disposed of. First, an outline of the trichlorosilane producing method will be described below, and then the residue disposal method will be described.

The trichlorosilane producing method can mainly include a tetrachlorosilane reduction step 1 and a reaction product gas processing step 2.

First, metal silicon, which is a raw material, is reacted with tetrachlorosilane and hydrogen with use of a chemical reactor or the like. Such a step of reacting metal silicon, tetrachlorosilane, and hydrogen with each other is herein referred to as a tetrachlorosilane reduction step 1. A main reaction carried out in the tetrachlorosilane reduction step 1 is represented by the following Formula (3).

(3) 3 SiCl₄ + 2 H₂ + Si → 4 SiHCl₃

Examples of metal silicon used for the reaction include solid substances each containing a silicon element in a metallic state, such as metallurgical metal silicon, ferrosilicon, and polysilicon. As metal silicon, publicly known metal silicon is used without any limitation. Note that metal silicon can contain an impurity such as an iron compound, and a component and an amount of the iron compound are not particularly limited. As metal silicon, metal silicon which is in finely powdered form and which has an average particle diameter of 100 µm to 300 µm is typically used.

Note that metal silicon which contains boron in an amount of several ppm to several hundred ppm is typically industrially available. In the tetrachlorosilane reduction step, metal silicon which contains boron in such an amount can be used without any particular limitation. However, boron may be taken into a chlorosilane compound when the chlorosilane compound is separated by condensation of a reaction product gas (later described). Therefore, it is preferable to use metal silicon which contains boron in the smallest possible amount so that an amount of boron taken into a separated chlorosilane compound is decreased and, accordingly, efficiency of distillation is increased or a load on a distillation device is reduced. Thus, the amount of boron contained in metal silicon used for the reaction is preferably several ppm to several hundred ppm, more preferably several ppm to 50 ppm.

As hydrogen used for the reaction, any of various kinds of hydrogen which are industrially available can be used. Moreover, hydrogen or the like discharged in the process of production of polysilicon can be also used after being refined as appropriate.

As tetrachlorosilane used for the reaction, tetrachlorosilane can be reused which is produced as a by-product in a case where metal silicon and hydrogen chloride are reacted with each other. Alternatively, tetrachlorosilane can be reused which is discharged in the process of production of polysilicon and is recovered as appropriate.

Note that, in the reaction, it is preferable to use a catalyst so as to increase a rate of the reaction and efficiently produce trichlorosilane with high selectivity. As the catalyst, a catalyst which has been conventionally used in this reaction system can be used. For example, a copper-based catalyst such as copper powder, copper chloride, or copper silicide is used. The catalyst is used in an amount of 0.1% by weight to 40% by weight, particularly 0.2% by weight to 20% by weight, with respect to metal silicon on a copper basis. Note that the catalyst can be used together with an iron component or together with an iron component and an aluminum component.

As the chemical reactor used for the reaction, a publicly known chemical reactor can be used without any particular limitation. Specific examples of the chemical reactor include a fixed-bed chemical reactor and a fluidized-bed chemical reactor. Of such chemical reactors, the fluidized-bed chemical reactor is preferably used in that it is possible to consecutively feed metal silicon, tetrachlorosilane, and hydrogen and, accordingly, possible to consecutively produce trichlorosilane.

Respective amounts of metal silicon, tetrachlorosilane, and hydrogen fed to the chemical reactor can be determined as appropriate in consideration of a type, capacity, and the like of the chemical reactor. A ratio of hydrogen to tetrachlorosilane is such that generally 1 mol to 5 mol of hydrogen is used with respect to 1 mol of tetrachlorosilane, more preferably 1 mol to 3 mol of hydrogen is used with respect to 1 mol of tetrachlorosilane. Note that a rate of feed can be set as appropriate depending on the type and a size of the chemical reactor used. For example, in a case where the fluidized-bed chemical reactor is used, tetrachlorosilane and hydrogen are fed at such respective rates that a rate of flow of tetrachlorosilane and a rate of flow of hydrogen allow a fluidized bed to be formed. Note also that tetrachlorosilane and hydrogen can be fed after being diluted with an inert gas (nitrogen gas, argon gas, or the like) which is not involved in the reaction.

A reaction temperature in the reaction can be determined as appropriate in consideration of a material and the capacity of the chemical reactor, the catalyst used, and the like. Generally, the reaction temperature is set to a range of 400°C to 700°C, particularly 450°C to 600°C.

As used herein, a product obtained by carrying out the tetrachlorosilane reduction step 1 will be referred to as a reaction product gas 7.

The reaction product gas 7 can contain metal silicon particles. Therefore, the chemical reactor is preferably provided with a dust collector. This allows (i) the reaction product gas to pass through the dust collector and accordingly (ii) a solid substance, such as the metal silicon particles, to be removed. Examples of the dust collector include a filter and a centrifugal dust collector. Of such dust collectors, the centrifugal dust collector is preferable. Examples of the centrifugal dust collector include a cyclone powder separator. In the cyclone powder separator, air flows downward in a helical manner along an inner wall. With this, particles to be removed are brought into contact with the inner wall, and are collected at a lower end of the cyclone powder separator. The cyclone powder separator is preferable because (i) the cyclone powder separator allows fine particles to be removed, (ii) the cyclone powder separator is easily installed, maintained, and managed, and (iii) the cyclone powder separator can be used at a high pressure and a high temperature.

The reaction product gas 7 can contain, in addition to trichlorosilane, for example, unreacted tetrachlorosilane, unreacted hydrogen, and the other chlorosilane compound as well as metal silicon particles which could not be removed by the dust collector. Further, in the tetrachlorosilane reduction step 1, metal silicon used as a raw material can contain an impurity, such as aluminum, in an amount of typically 0.01% by weight to 10% by weight. Therefore, the reaction product gas 7 can contain aluminum chloride and the like. Accordingly, the trichlorosilane producing method preferably includes a step of further processing the reaction product gas so as to refine trichlorosilane contained in the reaction product gas. As used herein, this step will be referred to as a reaction product gas processing step 2.

Note that, as used herein, a chlorosilane compound means a compound which contains a chlorine element and a silicon element. Examples of the chlorosilane compound include trichlorosilane, tetrachlorosilane, dichlorosilane, pentachlorosilane, and hexachlorosilane.

For example, the reaction product gas processing step 2 preferably includes a step of cleaning the reaction product gas 7. This makes it possible to trap the solid substance (for example, metal silicon which could not be removed by the dust collector) which can be contained in the reaction product gas 7. Examples of a cleaning method include a bubbling method and a shower method. According to the bubbling method, the reaction product gas 7 is cleaned by being blown into a silane solution layer and being subjected to bubbling. According to the shower method, the reaction product gas 7 is cleaned by being caused to pass through a silane solution sprayed in the form of a shower. Such cleaning can be carried out through multiple stages. For example, after the reaction product gas 7 is cleaned by the bubbling method, the reaction product gas 7 can be cleaned by the shower method. This is preferable because it is possible to more effectively remove an impurity contained in the reaction product gas 7.

The silane solution can contain trichlorosilane, tetrachlorosilane, the other chlorosilane compound, and the like. A temperature of the silane solution is preferably 40°C to 50°C so that the cleaning is efficiently carried out.

Further, the reaction product gas processing step 2 preferably includes a step of cooling the reaction product gas 7 so as to condense and thereby separate trichlorosilane. Note, here, that a means for cooling the reaction product gas 7 so as to condense trichlorosilane is not particularly limited, provided that it is possible to cool the reaction product gas 7 to a temperature equal to or lower than a temperature at which various chlorosilane compounds are condensed, and a publicly known cooling means can be employed. A temperature inside a device (for example, a buffer drum) in which the reaction product gas 7 is cooled is preferably not higher than -10°C, more preferably -60°C to -30°C. This makes it possible to efficiently condense trichlorosilane.

Moreover, it is preferable to isolate the chlorosilane compound by distilling a condensate obtained from the reaction product gas 7. For distillation, it is possible to use, for example, a distillation column which has a reboiler. As trays of the distillation column, trays which are typically used can be used without any limitation. For example, a packed column which is packed with, for example, a regular packing material or an irregular packing material, a bubble-cap column, a perforated-plate column, or the like can be used. The condensate can be fed to any part of the distillation column. However, it is more preferable to directly feed the condensate to a bottom of the distillation column so as to prevent the trays from being soiled. The reboiler which applies energy that causes the chlorosilane compound to be evaporated can be a reboiler which directly heats the bottom, whose periphery is jacketed, of the distillation column. Alternatively, the reboiler can be a heat exchanger which is provided outside the bottom of the distillation column. Alternatively, the reboiler can be a heat exchanger which is provided inside the bottom of the distillation column.

As such a heat exchanger, a shell and tube heat exchanger is generally suitably employed so that a larger heat transfer area is given. Alternatively, a coil heat exchanger, an electric heater, or the like can be employed. Note that scales made of aluminum chloride may be formed in the heat exchanger which applies energy for the distillation, in a case where a chlorosilane solution remains in the heat exchanger and accordingly aluminum chloride is highly concentrated. Therefore, the heat exchanger preferably has a structure which makes it difficult for the chlorosilane solution to remain in the heat exchanger. As a method of making it difficult for the chlorosilane solution to remain in the heat exchanger, a method in which convection caused by heating is used can be employed. Alternatively, a method in which the chlorosilane solution is forcibly caused to flow with use of a pump or the like can be suitably employed.

There is a considerably large difference between (i) a boiling point of the chlorosilane compound which should be recovered and refined and (ii) a boiling point of the impurity which should be separated and removed. Therefore, as the distillation, it is not particularly necessary to carry out high level rectification. In other words, it is possible to carry out the distillation in a range in which distillation operation can be maintained, and a reflux ratio can be approximately 0.1 to 1.

Note that an amount of solid aluminum chloride which is crystallized in a crystallizing step (later described) depends on a difference between (i) a concentration of aluminum chloride which is dissolved in a bottoms liquid and (ii) a saturated solubility after cooling. Therefore, the concentration of aluminum chloride which is dissolved in the bottoms liquid is preferably as high as possible, because it is possible to increase efficiency of removing aluminum chloride while reducing an amount of dissolved aluminum chloride which is processed and circulated.

Meanwhile, in order to (i) prevent aluminum chloride from depositing in the reboiler and thereby causing blockage in the reboiler and accordingly (ii) achieve stable long-term operation, it is preferable to adjust the concentration of aluminum chloride, which is dissolved in the bottoms liquid, to be lower than the saturated solubility at a temperature of the bottoms liquid. For example, in a case where the temperature of the bottoms liquid is not lower than 50°C, the concentration of aluminum chloride which is dissolved in the bottoms liquid is kept in a range of preferably 0.5% by weight to 1.8% by weight, more preferably 0.8% by weight to 1.5% by weight.

Note that tetrachlorosilane contained in the chlorosilane compound thus separated can be reused in the above-described tetrachlorosilane reduction step 1 after being subjected to a refining step. Meanwhile, trichlorosilane can be used as a raw material from which polysilicon is produced. Meanwhile, the above-described aluminum chloride can be separated as a solid substance, because the boiling point of aluminum chloride is higher than that of the chlorosilane compound.

The solid substance separated by the cleaning and/or the distillation is recovered as a residue (slurry) containing a liquid chlorosilane compound. As used herein, a residue which has been obtained by carrying out the reaction product gas processing step 2 including the cleaning and/or the distillation and which has not yet been transferred to the crystallizing step (later described) will be referred to as a before-crystallization residue 8.

A residue disposal method in accordance with an embodiment is a residue disposal method of disposing of a residue which contains aluminum chloride and which is discharged in a reaction product gas processing step included in a trichlorosilane producing method of producing trichlorosilane by reacting metal silicon, tetrachlorosilane, and hydrogen with each other, the residue disposal method including: a drying step of (i) drying the residue so that the residue contains a chlorosilane compound in an amount of not more than 10% by mass and (ii) obtaining a powdered residue. The trichlorosilane producing method preferably includes, as a step, the residue disposal method in accordance with an embodiment.

According to the above configuration, it is possible to sufficiently dry a residue and turn the residue into a powdered residue. Therefore, it is possible to efficiently dispose of the residue without causing blockage in a pipe, as compared with a case where the residue is disposed of as slurry. Moreover, according to the method, the residue is dried so that a waste (powdered residue) contains chlorosilane in an extremely small amount. In other words, it is possible to recover chlorosilane at a high recovery rate.

The residue disposal method or the trichlorosilane producing method can include a crystallizing step 3 of crystallizing part of aluminum chloride by cooling the before-crystallization residue 8 obtained in the reaction product gas processing step 2. Aluminum chloride which is crystallized in the crystallizing step 3 is present in a stable state as a solid substance, without being re-dissolved even in a case where the aluminum chloride is heated in a subsequent step. Furthermore, aluminum chloride which is crystallized has significantly good redispersibility, and therefore hardly causes a trouble, that is, hardly deposits in the reboiler and the like and accordingly hardly causes blockage in the reboiler and the like, unless the residue is let to remain in the reboiler and the like. The residue thus obtained, which contains crystallized aluminum chloride, will be referred to as an after-crystallization residue 9 herein.

Note that any one of the residue which has not been subjected to the above-described distillation (for example, the residue which has been subjected to merely the cleaning) and the residue which has been subjected to the distillation can be transferred to the crystallizing step 3, but both of the residue which has not been subjected to the above-described distillation and the residue which has been subjected to the distillation are preferably transferred to the crystallizing step 3.

As a device which carries out the crystallizing step 3, a liquid cooling device, inside or outside which a cooling medium is caused to flow, can be used. Note that, in so doing, aluminum chloride may slightly deposit on a wall surface, which is cooled, of the device, and scales made of aluminum chloride may be formed. This may cause a gradual decrease in heat exchange ability for cooling. However, scales thus formed are extremely easy to remove. Therefore, it is preferable to provide, to the wall surface to be cooled, a means for scraping the scales off. This makes it possible to easily remove the scales, even in a case where the scales are formed. Examples of a method of scraping the scales off include: a method in which a paddle, a helical ribbon, or the like is rotated with use of an electric motor; and a method in which a sponge ball or the like is caused to flow together with the residue. Any of such methods can be suitably employed.

A temperature inside the device which carries out the crystallizing step 3 is preferably not higher than 10°C, more preferably not higher than 5°C, still more preferably not higher than - 10°C. By carrying out crystallization at such a sufficiently low temperature, it is possible to prevent the crystallization from further progressing and accordingly possible to prevent scales from being formed, even in a case where a pipe after the cooling is further cooled by, for example, external air during winter. This makes it possible to suppress re-dissolution in a liquid during re-heating in a subsequent step. Further, a pressure inside the device which carries out the crystallization is not particularly limited, from the viewpoint of the crystallization. However, from the viewpoint of transfer of the liquid to a next step without use of a pump, the pressure can be 600 kPa to 400 kPa (gage pressure) or can be alternatively 450 kPa to 550 kPa (gage pressure).

The residue disposal method or the trichlorosilane producing method can include a residue concentrating step 4 of concentrating the residue (after-crystallization residue 9), obtained in the crystallizing step, by heating the residue (after-crystallization residue 9). This allows the liquid contained in the residue to be evaporated, and accordingly allows the solid substance to be further concentrated. That is, it is possible to further recover a usable chlorosilane compound and then dispose of the residue. The residue thus concentrated will be referred to as an after-concentration residue 10 herein.

A temperature inside a device which carries out the residue concentrating step 4 is preferably 70°C to 90°C, more preferably 80°C to 85°C. A pressure inside the device which carries out the residue concentrating step 4 is preferably 80 kPa to 120 kPa (gage pressure), more preferably 90 kPa to 110 kPa (gage pressure). The above temperature and the above pressure easily cause a temperature difference, and therefore allow a reduction in heat transfer area of the device. In other words, it is possible to reduce a size of the device. It is therefore possible to more efficiently concentrate the residue.

As a heating device used in the concentrating step, a publicly known device can be used without any particular limitation, provided that it is possible for the publicly known device to have the temperature at which the concentrating step can be carried out.

A concentration of the solid substance contained in the after-concentration residue 10 is preferably 20% by mass to 30% by mass, more preferably 25% by mass to 30% by mass, in a state where the after-concentration residue 10 contains crystals of aluminum chloride. By carrying out the residue concentrating step, it is possible to dispose of metal chloride, such as aluminum chloride, at a high concentration. Note that, according to a conventional technique, it is not possible to thus concentrate a residue so that a concentration of a solid substance becomes high, from the viewpoint of prevention of blockage in a pipe. According to the residue disposal method, since the residue is ultimately processed into a powdered residue as later described, it is possible to prevent blockage in a pipe even in a case where the residue is thus concentrated so that the concentration of the solid substance becomes high.

The residue disposal method or the trichlorosilane producing method includes a drying step 5 of (i) drying the residue so that the residue contains the chlorosilane compound in an amount of not more than 10% by mass and (ii) obtaining a powdered residue 11.

As used herein, a powdered residue 11 means the residue which has been dried to be in a powdered state. The powdered residue 11 contains the chlorosilane compound in an amount of not more than 10% by mass, preferably not more than 8% by mass, more preferably not more than 5% by mass. Thus, it is possible to recover the chlorosilane compound at a high recovery rate. A lower limit of the amount of the chlorosilane compound contained in the powdered residue 11 is not particularly limited, but can be, for example, more than 0% by mass or alternatively not less than 3% by mass. By turning the residue into a powdered residue, it is possible to transport the powdered residue 11 via a carrier gas in a disposal step 6 (later described).

A bulk density of the powdered residue 11 can be 600 kg/m3 to 800 kg/m3 or can be alternatively 660 kg/m3 to 710 kg/m3. An angle of repose of the powdered residue 11 can be 40° to 70° or can be alternatively 50° to 70°.

Note that the residue transferred to the drying step 5 can be any one of the before-crystallization residue 8, the after-crystallization residue 9, and the after-concentration residue 10. However, from the viewpoint of disposal of metal chloride, such as aluminum chloride, at a high concentration, the after-concentration residue 10 is more preferably transferred to the drying step 5. That is, the residue disposal method or the trichlorosilane producing method preferably includes the residue concentrating step 4 before the drying step 5.

The drying step 5 can be, for example, a step of drying the residue by heating the residue so that the chlorosilane compound and the like contained in the residue are evaporated. Alternatively, the drying step 5 can be a step of removing the chlorosilane compound from the residue by solid-liquid separation such as centrifugal separation or filtration. A temperature inside a device which heats the residue is preferably not lower than 50°C. Further, the temperature inside the device which heats the residue is preferably not higher than 130°C, more preferably not higher than 100°C. By heating the residue at 130°C or lower, it is possible to sufficiently dry the residue. By heating the residue at 100°C or lower, it is possible to effectively suppress sublimation of aluminum chloride.

In the drying step 5, it is possible to use a solid-liquid separating device which includes a heating mechanism or a centrifugal separation mechanism, each for drying the residue, and which is capable of separating a solid and a liquid. Examples of the heating mechanism include a mechanism which heats the residue by causing a heating medium (hot water, steam, or the like) to flow. Examples of the centrifugal separation mechanism include a mechanism which includes a rotary drum that applies a centrifugal force to the residue.

The steam used in the heating mechanism is preferably steam of not more than 0.2 ST, from the viewpoint of (i) ensuring of a heat transfer area (of, for example, a vertical stirring dryer) and (ii) suppression of sublimation of aluminum chloride. Note that 0.2 ST means steam having a pressure of 0.2 MPa (gage pressure).

Examples of the solid-liquid separating device include a pressure filter dryer, a vibration dryer, a vertical dryer, and a centrifugal decanter. The pressure filter dryer filters the residue while pressurizing the residue, and then dries the residue by heating the residue. The vibration dryer dries the residue by heating the residue, while fluidizing the residue by vibration. The vertical dryer dries the residue, having been introduced into the vertical dryer from an upper side of the vertical dryer, by heating the residue, and discharges the residue from a lower side of the vertical dryer (that is, discharges the powdered residue in a gravitational direction). The centrifugal decanter separates the liquid from the residue with a centrifugal force, by rotating a cylindrical rotary drum. Note that each of the pressure filter dryer, the vibration dryer, and the vertical stirring dryer carries out drying by a batch process, while the centrifugal decanter carries out drying by a continuous process.

From the viewpoint of (i) substantially complete evaporation of trichlorosilane from the residue and (ii) an increase in recovery rate of trichlorosilane, the pressure filter dryer, the vibration dryer, or the vertical dryer is preferable. Further, the vertical dryer is preferable, from the viewpoint of (i) smooth discharge of the powdered residue with a little solid substance remaining in the device and (ii) efficient drying of the residue. The centrifugal decanter is preferable, from the viewpoint of (i) continuous operation and (ii) a fact that scales made of aluminum chloride are not formed by heating.

The solid-liquid separating device preferably includes therein a stirring blade. By the residue being stirred by the stirring blade, blockage is not caused in the solid-liquid separating device by the residue. The solid-liquid separating device is more preferably the vertical dryer (that is, vertical stirring dryer) which includes a stirring blade. According to the vertical stirring dryer, it is possible to, by stirring, smoothly discharge the powdered residue in the gravitational direction while preventing the solid substance from remaining in the device.

Note that the solid-liquid separating device which does not include a stirring blade is also advantageous because there is no concern about corrosion of a stirring blade and because, since a shaft sealing structure is not required, maintenance is easily done.

The residue disposal method or the trichlorosilane producing method can include a disposal step 6 of disposing of the powdered residue 11. The disposal step 6 is carried out by, for example, transferring the powdered residue 11 to a facility, such as a disposal pit, via a carrier gas. As has been described, the powdered residue 11 is dried so that the residue contains the chlorosilane compound in an amount of not more than 10% by mass. Therefore, it is easy to transfer the powdered residue 11 via the carrier gas.

A kind of the carrier gas via which the powdered residue 11 is transferred is not particularly limited, but an inert carrier gas is preferable which does not undergo unnecessary reaction with the powdered residue 11. A dew-point temperature of the carrier gas is preferably not higher than -70°C, from the viewpoint of safe and efficient disposal of the powdered residue. Examples of the carrier gas include nitrogen.

An embodiment can be arranged as follows.
[1] A residue disposal method of disposing of a residue which contains aluminum chloride and which is discharged in a reaction product gas processing step included in a trichlorosilane producing method of producing trichlorosilane by reacting metal silicon, tetrachlorosilane, and hydrogen with each other, the residue disposal method including: a drying step of (i) drying the residue so that the residue contains a chlorosilane compound in an amount of not more than 10% by mass and (ii) obtaining a powdered residue.
[2] The residue disposal method described in [1], further including, before the drying step, a residue concentrating step of concentrating the residue so that a concentration of a solid substance contained in the residue is 20% by mass to 30% by mass in a state where the solid substance contains crystals of the aluminum chloride.
[3] The residue disposal method described in [1] or [2], wherein a temperature in the drying step is not higher than 130°C.
[4] The residue disposal method described in any one of [1] through [3], wherein the powdered residue obtained in the drying step is transferred via an inert carrier gas, having a dew-point temperature of not higher than -70°C, and is disposed of.
[5] The residue disposal method described in any one of [1] through [4], wherein the drying step is carried out with use of a vertical dryer.
[6] A trichlorosilane producing method including, as a step, a residue disposal method described in any one of [1] through [5].

The present invention is not limited to the embodiments, but can be altered by a skilled person in the art within the scope of the claims and also encompasses, in its technical scope, any embodiment derived by combining technical means disclosed in differing embodiments.

The invention will be described below in more detail with reference to Examples. Note, however, that the invention is not limited to such Examples.

### [1. Amount of chlorosilane compound contained in residue]

The following experiment was carried out so that a relationship between (i) an amount of a chlorosilane compound contained in a residue and (ii) fluidity of the residue was examined.

### (1) Preparation of residue

An after-concentration residue was obtained in an existing residue concentrating step carried out after an existing crystallizing step. That is, an after-concentration residue 10 obtained by carrying out the tetrachlorosilane reduction step 1 through the residue concentrating step 4 illustrated in Fig. 1 was used.

### (2) Solid-liquid separating device

As a solid-liquid separating device, a vertical stirring dryer was used. First, 200 kg of the after-concentration residue was introduced into the vertical stirring dryer. Thereafter, since, by carrying out a drying step, contents were evaporated and accordingly a liquid level in the vertical stirring dryer was lowered, 30 kg of the after-concentration residue was additionally introduced into the vertical stirring dryer 3 times to 11 times, as necessary, so that the liquid level could be maintained.

### (3) Measurement items

### Temperature

A temperature inside the vertical stirring dryer was measured with use of a thermocouple.

### • Estimated concentration of slurry (concentration of solid substance)

A liquid evaporated from the vertical stirring dryer was condensed with use of a condenser, and an amount of a resultant condensate and an amount of the after-concentration residue which was introduced into the vertical stirring dryer were used to calculate a concentration of slurry.

### • Weight of M-Si (metal silicon)

In advance, the after-concentration residue which had not yet been introduced into the vertical stirring dryer was evaporated to dryness, and a concentration of M-Si contained in the after-concentration residue was calculated. The concentration of M-Si and a total amount of the after-concentration residue which was introduced into the vertical stirring dryer were used to calculate a weight of M-Si which was introduced into the vertical stirring dryer.

### • Power

Power of a stirring blade was calculated in accordance with an estimation equation from an electric current value measured with use of an ammeter.

### • Electric current value

The electric current value, which was of a motor of the stirring blade, was measured with use of an ammeter.

### (4) Results

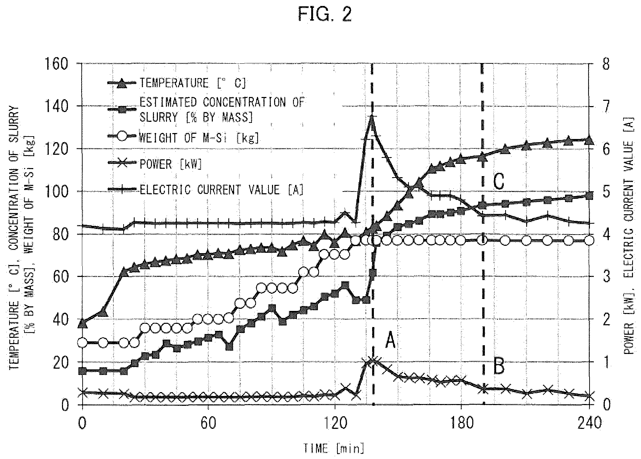

Fig. 2 is a graph illustrating respective variations, with time, of (i) the temperature inside the vertical stirring dryer, (ii) the concentration of the solid substance contained in an obtained residue, (iii) the weight of the metal silicon contained in the obtained residue, (iv) the power of the stirring blade, and (v) the electric current value of the motor of the stirring blade.

It is considered that, at a time when the power of the stirring blade was at its peak ("A" in Fig. 2), the solid substance was highly viscous and accordingly the fluidity of the residue was poor. It is considered that, in a time period when the power was stable at a low level after its peak ("B" in Fig. 2), the residue became a dried powdered residue and accordingly the flowability was ensured, so that a transfer via a carrier gas became possible. Fig. 2 shows that the concentration of the slurry, estimated as above, was 100% at the end of the experiment (i.e., at a time point of 240 min). However, an actual concentration of the solid substance at the end of the experiment was 98% by mass. That is, there was a difference of 2% between such an estimated concentration and the actual concentration. Therefore, although Fig. 2 shows that the concentration of the solid substance was approximately 94% by mass at "C" in Fig. 2, it is considered that the actual concentration of the solid substance at "C" was approximately 92% by mass (the amount of the chlorosilane compound contained in the residue was approximately 8% by mass).

In view of the above, it is considered that, by causing an amount of a chlorosilane compound contained in a residue to be not more than 10% by mass, it is possible to cause the residue to be a sufficiently dried powdered residue and possible to transfer such a powdered residue via a carrier gas.

### [2. Test with use of silane solution]

### (1) Preparation of silane solution

A silane solution which contained a solid substance at a concentration of 50% by mass was obtained by adding raw material M-Si to an after-concentration residue obtained in a residue concentrating step carried out after an existing crystallizing step (that is, an after-concentration residue 10 obtained by carrying out the tetrachlorosilane reduction step 1 through the residue concentrating step 4 illustrated in Fig. 1).

### (2) Solid-liquid separating device

As a solid-liquid separating device, a pressure filter dryer, a vibration dryer, a vertical stirring dryer, or a centrifugal decanter was used. Into each of those devices, 16.2kg of the silane solution was introduced. The each of the devices was then operated under the following conditions.
- Effective capacity: 10 L
- Heat transfer area: 0.25 m2
- Jacket heat source: 0.3 ST
- Pressure inside container: atmospheric pressure
   Note that each of the pressure filter dryer, the vertical stirring dryer, and the centrifugal decanter had a stirring blade (screw). The stirring blade of the vertical stirring dryer was operated under the following conditions.
- Type of stirring blade: double ribbon type
- Power of motor: 0.2 kW
- Rotational frequency of stirring blade: 85 rpm

### (3) Measurement items

### • Amount of chlorosilane compound contained in residue

An amount of a chlorosilane compound contained in an obtained residue was measured by a dry method.

### • Concentration of solid substance contained in liquid separated from residue

A concentration of the solid substance contained in a liquid separated from the obtained residue was measured by a dry method.

### • Scales made of aluminum chloride

Scales which were made of aluminum chloride and which were formed in each of the devices were visually checked.

### (4) Results

Table 1 shows obtained results, together with performance and the like of each of the devices.

**[Table 1]**

| | Pressure filter dryer | | Vibration dryer | | Vertical stirring dryer | | Centrifugal decanter | |
|---|---|---|---|---|---|---|---|---|
| Amount of chlorosilane compound contained in residue (% by mass) | 5 to 6 | G | 0 to 5 | G | 0 to 5 | G | 10 to 26 | F |
| Concentration of solid substance in liquid separated from residue (ppm) | 2,000 to 4,000 | F | | E | | E | 1,000 | G |
| Scales made of aluminum chloride | Scales were formed | F | Scales were formed | F | Scales were formed | F | No scales were formed | G |
| Operation of device | Easy | G | Easy | G | Easy | G | Easy | G |
| Process of device body | Batch process | F | Batch process | F | Batch process | F | Continuous process | G |
| Erosion | Stirring blade is replaceable on regular basis | G | No internal structure | G | Stirring blade is replaceable on regular basis | G | Screw is replaceable on regular basis | G |
| Discharge of metal silicon | With forced discharge function by stirring blade | G | Discharge only by vibration | F | With forced discharge function by stirring blade | G | With forced discharge function by screw | G |
| Maintenance Overall evaluation | With shaft sealing structure F | F | No shaft sealing structure F | G | With shaft sealing structure E | F | With shaft sealing structure G | F |

Note that, in Table 1, "G (good)" indicates that a device can be favorably employed, "E (excellent)" indicates that the device can be more favorably employed, and "F (fair)" indicates that the device can be employed but is preferably improved.

According to each of the vibration dryer and the vertical stirring dryer, it was possible to cause the amount of the chlorosilane compound contained in the residue to be extremely small, that is, it was possible to substantially completely evaporate the chlorosilane compound contained in the residue. According to the pressure filter dryer, by drying the residue after filtering the residue, it was possible to substantially completely evaporate the chlorosilane compound contained in the residue. According to the centrifugal decanter, the chlorosilane compound remained, in a certain amount, in the solid substance. Furthermore, according to the vibration dryer and the vertical stirring dryer, the liquid separated from the residue hardly contained the solid substance. Thus, each of the vibration dryer and the vertical stirring dryer brought more preferable results.

Each of the devices was operated easily. Note that, although the centrifugal decanter has a complicated structure (for example, the centrifugal decanter has a screw which rotates at a high speed), it is possible to easily operate the centrifugal decanter, provided that operational conditions were established. In terms of a process of a device body, the centrifugal decanter, which carries out drying by a continuous process, is more preferable than the pressure filter dryer, the vibration dryer, and the vertical stirring dryer, each of which carries out drying by a batch process.

Further, the centrifugal decanter carries out drying by a process which does not involve heating. This causes scales made of aluminum chloride not to be formed. Note that, since the pressure filter dryer and the vertical stirring dryer each have a stirring blade, a certain amount of scales made of aluminum chloride are formed.

Note that "erosion" in Table 1 shows a measure against erosion of a device. According to the pressure filter dryer, the vertical stirring dryer, and the centrifugal decanter, it is possible to deal with erosion by replacing the stirring blade or the screw on a regular basis. Meanwhile, since the vibration dryer does not have an internal structure such as a stirring blade or a screw, there is no concern about erosion.

From the viewpoint of efficient discharge of metal silicon which can be contained in the residue, the pressure filter dryer, the vertical stirring dryer, and the centrifugal decanter, each of which has a stirring blade or a screw, are more preferable than the vibration dryer.

The vibration dryer, which does not need to have a shaft sealing structure, is easily maintained, as compared with the pressure filter dryer, the vertical stirring dryer, and the centrifugal decanter, each of which needs to have a shaft sealing structure for the stirring blade or the screw.

In a case where evaluation is made in consideration of all of the above matters, the vertical stirring dryer and the centrifugal decanter are more preferable, and, particularly, the vertical stirring dryer is still more preferable, as a solid-liquid separating device.

### [3. Bench test]

The following bench test was carried out so as to obtain data based on an effective capacity of 100 L.

### (1) Preparation of residue

An after-concentration residue was obtained in a residue concentrating step carried out after an existing crystallizing step. That is, an after-concentration residue 10 obtained by carrying out the tetrachlorosilane reduction step 1 through the residue concentrating step 4 illustrated in Fig. 1 was used. Note that a concentration (an estimated concentration) of a solid substance contained in the after-concentration residue was 16% by mass.

### (2) Drying and transfer of residue

Into a vertical stirring dryer, 30 kg/batch of the after-concentration residue obtained as in (1) was introduced, and the vertical stirring dryer was then operated under the following conditions.
- Effective capacity: 100 L
- Heat transfer area: 0.94 m2
- Type of stirring blade: double ribbon type
- Shaft seal: single mechanical seal
- Power of motor: 2.2 kW
- Jacket heat source: 0.2 ST
- Cooling medium of condenser: industrial water (IW)
- Pressure inside container: atmospheric pressure
- Rotational frequency of stirring blade: 48 rpm or 62 rpm

An obtained powdered residue was transferred to a nitrogen transfer drum, and then the powdered residue was discharged into a disposal pit.

### (3) Results

in a case where the jacket heat source was 0.2 ST, an amount of a chlorosilane compound contained in the powdered residue was 2% by mass to 8% by mass. A U value was 350 W/m2 (in a case where drying was carried out at a constant rate). A bulk density of the powdered residue was 664 kg/m3 to 707 kg/m3, and an angle of repose of the powdered residue was 40° to 70°. As above, it was confirmed that it is possible to transfer an obtained powdered residue via nitrogen and dispose of the powdered residue.

The present invention can be suitably used for a trichlorosilane producing method.

### Reference Signs List

- 1: Tetrachlorosilane reduction step
- 2: Reaction product gas processing step
- 3: Crystallizing step
- 4: Residue concentrating step
- 5: Drying step
- 6: Disposal step
- 7: Reaction product gas
- 8: Before-crystallization residue
- 9: After-crystallization residue
- 10: After-concentration residue
- 11: Powdered residue

## Claims

1. A residue disposal method of disposing of a residue which contains aluminum chloride and which is discharged in a reaction product gas processing step included in a trichlorosilane producing method of producing trichlorosilane by reacting metal silicon, tetrachlorosilane, and hydrogen with each other,
the residue disposal method **characterized by** comprising:
- a drying step of (i) drying the residue so that the residue contains a chlorosilane compound in an amount of not more than 10% by mass and (ii) obtaining a powdered residue, and
- a temperature in the drying step being 50°C to 130°C.

2. The residue disposal method as set forth in claim 1, further comprising, before the drying step, a residue concentrating step of concentrating the residue so that a concentration of a solid substance contained in the residue is 20% by mass to 30% by mass in a state where the solid substance contains crystals of the aluminum chloride.

3. The residue disposal method as set forth in claim 1 or 2, wherein the powdered residue obtained in the drying step is transferred via an inert carrier gas, having a dew-point temperature of not higher than -70°C, and is disposed of.

4. The residue disposal method as set forth in any one of claims 1, 2 and 3, wherein the drying step is carried out with use of a vertical dryer.

5. A trichlorosilane producing method comprising, as a step, a residue disposal method recited in any one of claims 1, 2, 3 and 4.

## Patentansprüche

1. Rückstandsentsorgungsverfahren zum Entsorgen eines Aluminiumchlorid enthaltenden Rückstandes, der in einem Reaktionsproduktgasverarbeitungsschritt abgeführt wird, der in einem Verfahren zur Herstellung von Trichlorsilan enthalten ist, bei dem Trichlorsilan durch Reagieren von Metallsilizium, Tetrachlorsilan und Wasserstoff hergestellt wird, wobei das Rückstandsentsorgungsverfahren umfasst:
- einen Trocknungsschritt zum (i) Trocknen des Rückstands, so dass der Rückstand eine Chlorsilanverbindung in einer Menge von nicht mehr als 10 Massen-% enthält, und (ii) Erhalten eines pulverisierten Rückstandes, und
- eine Temperatur in dem Trocknungsschritt, die 50 °C bis 130 °C beträgt.

2. Rückstandsentsorgungsverfahren nach Anspruch 1, ferner umfassend, vor dem Trocknungsschritt, einen Rückstandskonzentrationsschritt zum Konzentrieren des Rückstands, so dass eine Konzentration einer in dem Rückstand enthaltenen festen Substanz 20 Massen-% bis 30 Massen-% in einem Zustand beträgt, in dem die feste Substanz Kristalle des Aluminiumchlorids enthält.

3. Rückstandsentsorgungsverfahren nach Anspruch 1 oder 2, wobei der im Trocknungsschritt erhaltene pulverförmige Rückstand über ein inertes Trägergas, das eine Taupunkttemperatur von nicht mehr als -70 °C aufweist, überführt und entsorgt wird.

4. Rückstandsentsorgungsverfahren nach einem der Ansprüche 1, 2 und 3, wobei der Trocknungsschritt unter Verwendung eines Vertikaltrockners durchgeführt wird.

5. Verfahren zur Herstellung von Trichlorsilan, das als einen Schritt ein Rückstandsentsorgungsverfahren nach einem der Ansprüche 1, 2, 3 und 4 umfasst.

## Revendications

1. Procédé d'élimination de résidus consistant à éliminer un résidu qui contient du chlorure d'aluminium et qui est déchargé dans une étape de traitement du produit de réaction gazeux inclus dans un procédé de production de trichlorosilane consistant à produire du trichlorosilane en faisant réagir du silicium métallique, du tétrachlorosilane et de l'hydrogène les uns avec les autres,
le procédé d'élimination de résidus étant **caractérisé en ce qu'**il comprend :
- une étape de séchage consistant à (i) sécher le résidu de sorte que le résidu contient un composé chlorosilane en une quantité ne dépassant pas 10 % en masse et (ii) obtenir un résidu en poudre, et
- une température dans l'étape de séchage qui est de 50 °C à 130 °C.

2. Procédé d'élimination de résidus selon la revendication 1, comprenant en outre, avant l'étape de séchage, une étape de concentration de résidus consistant à concentrer le résidu de sorte qu'une concentration d'une substance solide contenue dans le résidu est de 20 % en masse à 30 % en masse dans un état dans lequel la substance solide contient des cristaux du chlorure d'aluminium.

3. Procédé d'élimination de résidus selon la revendication 1 ou 2, dans lequel le résidu en poudre obtenu à l'étape de séchage est transféré par le biais d'un gaz vecteur inerte, ayant une température de point de rosée non supérieure à -70 °C, et est éliminé.

4. Procédé d'élimination de résidus selon l'une quelconque des revendications 1, 2 et 3, dans lequel l'étape de séchage est réalisée à l'aide d'un séchoir vertical.

5. Procédé de production de trichlorosilane comprenant, en tant qu'étape, un procédé d'élimination de résidus selon l'une quelconque des revendications 1, 2, 3 et 4.
